(19) Europäisches Patentamt / European Patent Office / Office européen des brevets

(11) **EP 2 543 095 B1**

(12) **FASCICULE DE BREVET EUROPEEN**

(45) Date de publication et mention
de la délivrance du brevet:
**20.11.2013 Bulletin 2013/47**

(21) Numéro de dépôt: **11710002.4**

(22) Date de dépôt: **23.02.2011**

(51) Int Cl.:
*H01M 2/20* (2006.01)　　*H01M 6/40* (2006.01)
*H01M 10/04* (2006.01)　　*H01M 10/052* (2010.01)
*H01M 10/0585* (2010.01)

(86) Numéro de dépôt international:
**PCT/FR2011/000107**

(87) Numéro de publication internationale:
**WO 2011/107675 (09.09.2011 Gazette 2011/36)**

(54) **MICROBATTERIE ET SON PROCEDE DE FABRICATION**

MIKROBATTERIE UND VERFAHREN ZU IHRER HERSTELLUNG

MICROBATTERY AND METHOD FOR MANUFACTURING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.03.2010 FR 1000822**

(43) Date de publication de la demande:
**09.01.2013 Bulletin 2013/02**

(73) Titulaire: **Commissariat à l'Énergie Atomique
et aux Énergies Alternatives
75015 Paris (FR)**

(72) Inventeurs:
• **OUKASSI, Sami
F-38120 Saint-Egrève (FR)**
• **CORONEL, Philippe
F-38530 Barraux (FR)**

(74) Mandataire: **Talbot, Alexandre et al
Cabinet Hecké
Europole, BP 1537
10, rue d'Arménie
38025 Grenoble Cedex 1 (FR)**

(56) Documents cités:
WO-A1-2008/011061　　DE-A1-102008 011 523
FR-A1- 2 874 128　　JP-A- 61 165 965
US-A1- 2007 087 230

## Description

## Domaine technique de l'invention

L'invention concerne une microbatterie qui comporte un empilement de couches minces solides formé sur un substrat, ledit empilement étant recouvert par une couche d'encapsulation et comportant successivement :

- un premier ensemble collecteur/électrode en contact direct avec le substrat,
- un électrolyte solide,
- un second ensemble collecteur/électrode ayant une face avant en contact direct avec la face interne de la couche d'encapsulation et une face arrière en contact direct avec l'électrolyte solide et,
- des moyens de connexion électrique du second ensemble collecteur/électrode à une charge électrique externe.

L'invention concerne également un procédé de fabrication d'une telle microbatterie.

## État de la technique

Une microbatterie est définie comme étant un générateur électrochimique tout solide formé par un empilement actif de couches minces qui constituent les électrodes (positive et négative) séparées par un électrolyte. Une telle microbatterie comprend, de plus, des collecteurs de courant métalliques. Toutes les couches de la microbatterie sont sous la forme de films minces obtenus par PVD (« Physical Vapor Deposition ») ou CVD (« Chemical Vapor Deposition »).

L'électrode positive est généralement un matériau d'insertion du lithium, par exemple, les oxydes de métaux lithiés et, l'électrolyte un isolant électronique avec une forte conductivité ionique.

Pour les microbatteries au lithium, on distingue trois principales catégories de microbatterie mettant en jeu les ions $Li^+$, selon la nature de l'électrode négative : les microbatteries dites "lithium-métal", "lithium-ion" ou "lithium-free".

Les microbatteries dites "lithium-métal" présentent les meilleures propriétés électrochimiques, notamment en termes de potentiel et de stabilité de la capacité de charge et de décharge. Cette première catégorie de microbatterie au lithium comporte une électrode négative en lithium métallique.

Les microbatteries dites "lithium-ion" (ou Li-ion) ont une électrode négative constituée par un matériau d'intercalation ou d'insertion du lithium. Les cations $Li^+$ font des aller-retours entre les électrodes négative et positive à chaque charge et décharge de la microbatterie. Cette catégorie de microbatterie permet l'utilisation des techniques de microfabrication usuelles, mais présente généralement de moins bonnes performances électrochimiques en cyclage.

Enfin, les microbatteries dites "lithium-free" comportent un collecteur métallique de courant en tant qu'électrode négative. Pendant une première charge, les ions $Li^+$ migrent depuis l'électrode positive et sont bloqués par le collecteur de courant. Les ions $Li^+$ forment, par électrodéposition, une couche de lithium métallique sur le collecteur de courant. Ensuite, la batterie se comporte de la même manière qu'une batterie lithium-métal, avec une faible chute de la capacité lors du premier cycle.

Les microbatteries au lithium sont particulièrement intéressantes du fait de leur forte densité massique, leur surface de stockage utile d'énergie élevée et leur faible toxicité. Néanmoins, elles sont très sensibles à l'air et en particulier à l'humidité. Afin de protéger l'empilement actif de la microbatterie au lithium, une encapsulation est généralement réalisée afin d'isoler l'empilement du contact extérieur et éviter ainsi toute contamination provenant de l'environnement.

Différentes architectures de microbatteries existent, notamment des architectures qui présentent une connexion électrique planaire ou verticale c'est-à-dire dans lesquelles la connexion électrique finale de la microbatterie à une charge externe est réalisée soit sur un même plan que celui du collecteur de courant soit sur un plan vertical par rapport à ce dernier.

À titre d'exemple, le document WO2008/011061 décrit une microbatterie à connexion électrique planaire. Comme représenté à la figure 1, la microbatterie comporte typiquement un empilement 1 sur un substrat 2. L'empilement 1 est constitué, successivement, d'un premier collecteur de courant 3, d'une première électrode 4 recouverte par un électrolyte solide 5, d'une seconde électrode 6 et d'un second collecteur de courant 7. L'empilement 1 est encapsulé par un revêtement 8 inerte vis-à-vis des éléments constitutifs de l'empilement 1 et destiné à le rendre étanche et à le protéger contre les contaminations externes. Une reprise de contact est effectuée par l'intermédiaire d'une couche métallique 9 sur le revêtement 8 et couplée au second collecteur de courant 7 par l'intermédiaire d'un trou traversant 10 réalisé dans le revêtement 8. La reprise de contact relie le second collecteur de courant 7 situé au-dessus de l'empilement 1 et le premier collecteur de courant 3. Le trou traversant 10 passe à travers le revêtement 8 et définit une zone localisée 11 de l'empilement 1 recouverte uniquement par la couche métallique 9 formant la reprise de contact. La zone localisée 11 constitue alors un point de fragilité de la microbatterie plus sensible aux contraintes mécaniques. En particulier, le fonctionnement de microbatterie au lithium étant basé sur le transport du courant par les ions lithium, lors de la charge et de la décharge de la microbatterie, les électrodes subissent des déformations dues à l'insertion et l'extraction, également appelée désinsertion, des ions lithium dans les électrodes. Ces modifications répétées de volume entraînent rapidement des dommages mécaniques. Les parties de la couche 9 comprises entre les zones localisées 11 et le point fixe de liaison avec la couche 3 sont plus sensibles aux contraintes mécaniques ce qui, par conséquent, peut engendrer des défaillances à l'usage et être à l'origine d'une baisse des performances de la microbatterie.

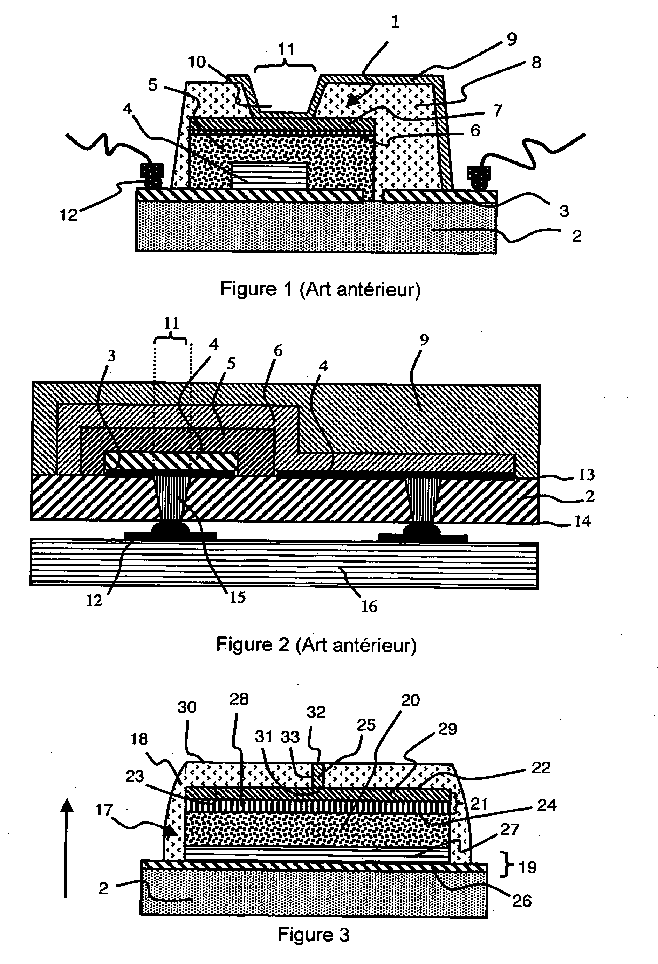

Comme représenté à la figure 1, la connexion électrique de ce type d'architecture à charge électrique externe (non représentée) est réalisée classiquement par l'intermédiaire de plots de contact 12 disposés de part et d'autre du revêtement 8, dans le prolongement du premier collecteur de courant 3. Les plots de contact 12 constituent des bornes de contact qui permettent de relier la microbatterie à la charge électrique externe, par exemple, à une ou plusieurs microbatteries supplémentaires, à une puce électronique ou à une charge électrique quelconque. La connexion finale à la charge externe est typiquement effectuée par une étape de soudure à fil. Outre une mise en oeuvre complexe et délicate, ce type d'architecture présente un inconvénient en termes d'intégration. En effet, une partie de la surface du premier collecteur de courant 3 est occupée par les plots de contacts 12 qui, par conséquent, restreignent la surface dédiée à la première électrode 4. Or, les propriétés électrochimiques de la microbatterie et, par exemple, la capacité (en $\mu Ah.cm^{-2}$) sont proportionnelles à la surface active de la microbatterie, notamment, aux dimensions des interfaces première électrode 4/électrolyte 5 et première électrode 4/premier collecteur de courant 3. On observe alors une perte de surface active synonyme d'une perte à la fois en performance électrochimique et en densité d'intégration (nombre de dispositifs par unité de surface sur substrat).

À titre d'exemple, le document US-A-20070238019 décrit une microbatterie à connexion électrique verticale par rapport au plan principal du substrat 2. Dans cette configuration représentée à la figure 2, un empilement déposé sur un substrat 2 comporte classiquement une cathode 4 et une anode 6 séparées par un électrolyte 5. Le substrat 2 possède une face avant 13 et une face arrière 14. Des premier et second collecteurs de courant, respectivement, 3 et 4, dont disposés sur la face avant 13 du substrat 2. Le substrat 2 présente des connexions traversantes 15 depuis les collecteurs de courant, 3 et 4, en face avant 13 jusqu'à une charge extérieure 16 à connecter au niveau de la face arrière 14 du substrat 2. Cette configuration permet d'augmenter la surface active de la microbatterie et également d'améliorer à la fois les propriétés électrochimiques et la densité d'intégration. Néanmoins, cette architecture présente une mise en oeuvre complexe, dans la mesure ou plusieurs étapes de microfabrication (dépôt, gravure, polissage mécano-chimique) sont nécessaires à la réalisation des connexions électriques verticales.

D'autres architectures de microbatterie avec une connexion verticale ont été proposées. On peut citer, par exemple, les documents JP-A-61165965, US-A-2007087230 et DE-A-102008011523.

Les solutions décrites dans l'art antérieur restent néanmoins insuffisantes pour s'affranchir des problèmes de contraintes mécaniques générés par la reprise de contact ou, difficiles à mettre en oeuvre. En particulier, la présence d'une zone localisée induit un point de fragilité au sein de la microbatterie, plus particulièrement assujetti aux déformations volumiques de la microbatterie, qui risque de craquer, se fissurer ou se délaminer.

## Objet de l'invention

L'objet de l'invention a pour but de réaliser une microbatterie et le procédé de fabrication d'une telle microbatterie remédiant aux inconvénients de l'art antérieur.

En particulier, l'invention a pour but une microbatterie performante présentant un rendement de stockage de l'énergie optimisé, une densité d'intégration élevée et une durée de vie améliorée. La microbatterie est destinée à être fabriquée selon un procédé de fabrication industriel, facile à mettre en oeuvre, économiquement viable et compatible avec les technologies mises en oeuvre dans le domaine de la microélectronique.

Selon l'invention, ce but est atteint par une microbatterie et un procédé de fabrication d'une telle microbatterie selon les revendications annexées.

En particulier, ce but est atteint par le fait que les moyens de connexion électrique sont constitués par au moins deux cloisons électriquement conductrices traversant la couche d'encapsulation depuis la face interne jusqu'à la face externe de ladite couche d'encapsulation, chacune desdites cloisons ayant une paroi inférieure en contact direct avec la face avant du second ensemble collecteur/électrode et une paroi supérieure débouchant sur la face externe de la couche d'encapsulation et par le fait que lesdites cloisons forment un réseau de compartimentation au sein de la couche d'encapsulation.

Selon un développement particulier au moins deux cloisons sont adjacentes et parallèles l'une par rapport à l'autre et, séparées par une partie de la couche d'encapsulation.

Selon un mode de réalisation préférentiel, au moins deux cloisons sont adjacentes et parallèles l'une par rapport à l'autre et, séparées par une partie de la couche d'encapsulation et la distance séparant les deux cloisons adjacentes et parallèles est inférieure ou égale à l'inverse de la racine carré de la densité de dislocations de ladite couche d'encapsulation.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente, schématiquement et en coupe, une microbatterie à connexion électrique planaire selon l'art antérieur.

La figure 2 représente, schématiquement et en coupe, une microbatterie à connexion électrique verticale selon l'art antérieur.

La figure 3 représente, schématiquement et en coupe, une microbatterie selon un premier mode de réalisation particulier de l'invention.

Les figures 4 à 10 représentent, schématiquement et en coupe, différentes étapes d'un procédé de fabrication d'une microbatterie selon la figure 3.

La figure 11 représente, schématiquement et en coupe, une microbatterie selon un second mode de réalisation particulier de l'invention.

La figure 12 représente, schématiquement et en vue de dessus, une microbatterie selon un troisième mode de réalisation particulier de l'invention.

La figure 13 représente, schématiquement et en coupe selon l'axe AA de la figure 12, une microbatterie selon le troisième mode de réalisation particulier de l'invention.

La figure 14 représente, schématiquement et en vue de dessus, une microbatterie selon un quatrième mode de réalisation particulier de l'invention.

La figure 15 représente, schématiquement et en coupe selon l'axe BB de la figure 14, une microbatterie selon le quatrième mode de réalisation particulier de l'invention.

**Description de modes particuliers de réalisation.**

En référence à la figure 3, une microbatterie appelée également batterie "tout solide", comporte un empilement 17 de couches minces solides formé sur un substrat 2. Le substrat 2 peut être une plaque en silicium ou une plaque en silicium contenant un circuit intégré à la demande, également appelée circuit ASIC ("Application Specific Integrated Circuit"). Le substrat 2 peut également être recouvert par une couche de passivation (non représentée) constituée par un diélectrique comme le dioxyde de silicium ($SiO_2$) ou par une bicouche constituée successivement d'une couche de $SiO_2$ et d'une couche de nitrure de silicium ($Si_3N_4$). La microbatterie est, de préférence, une microbatterie au lithium.

L'empilement 17 a une épaisseur, avantageusement, comprise entre $2\mu m$ et $20\mu m$, de préférence $15\mu m$.

L'empilement 17 est recouvert par une couche d'encapsulation 18 et comporte successivement :

- un premier ensemble 19 collecteur/électrode en contact direct avec le substrat 2,
- un électrolyte solide 20,
- un second ensemble 21 collecteur/électrode ayant une face avant 22 (en haut à la figure 3) en contact direct avec la face interne 23 de la couche d'encapsulation 18 et une face arrière 24 (en bas à la figure 3) en contact direct avec l'électrolyte solide 20 et,
- des moyens de connexion électrique 25 du second ensemble 21 collecteur/électrode à une charge électrique extérieure.

Les premier et second ensemble collecteur/électrode, respectivement 19 et 21, sont chacun formés d'au moins une couche mince.

Selon un premier mode de réalisation particulier représenté à la figure 3, le premier ensemble 19 collecteur/électrode peut être formé par un premier collecteur de courant 26 et une électrode positive 27. Le premier collecteur de courant 26 est alors en contact direct avec le substrat 2 et l'électrode positive 27 est située entre le premier collecteur de courant 26 et l'électrolyte solide 20.

Le second ensemble 21 collecteur/électrode peut comporter une couche mince constituant une électrode négative 28 et une couche mince constituant un second collecteur de courant 29. Le second ensemble 21 est, de préférence, formé par l'électrode négative 28 et le second collecteur de courant 29. Comme représenté à la figure 3, le second collecteur de courant 29 est formé sur l'électrode négative 28 et l'électrolyte solide 20 est disposé entre l'électrode positive 27 et l'électrode négative 28. Dans ce cas, la face avant 22 et la face arrière 24 du second ensemble 21 collecteur/électrode sont constituées, respectivement, par la face avant du second collecteur de courant 29 et la face arrière de l'électrode négative 28.

Les premier et second collecteurs de courant, respectivement 26 et 29, sont métalliques, par exemple en platine (Pt), chrome, (Cr), or (Au), titane (Ti), tungstène (W) ou molybdène (Mo).

L'électrode positive 27 a une dimension inférieure à celle du premier collecteur de courant 26 de sorte que l'électrode positive 27 ne s'étend pas au-delà du périmètre du premier collecteur de courant 26 et ne soit pas en contact avec le substrat 2 ou avec la couche de passivation du substrat 2. Les matériaux utilisés comme matériaux actifs de l'électrode positive 27 peuvent être soit des matériaux non lithiés comme, par exemple, les sulfures ou disulfures de cuivre (CuS ou $CuS_2$), les oxysulfures de tungstène ($WO_yS_z$), les disulfures de titane ($TiS_2$), les oxysulfures de titane ($TiO_xS_y$) ou les oxydes de vanadium ($V_xO_y$) soit des matériaux lithiés comme, par exemple, les oxydes mixtes à base de lithium tels que l'oxyde de lithium et de cobalt ($LiCoO_2$), l'oxyde de lithium et de nickel ($LiNiO_2$), l'oxyde de lithium et de manganèse ($LiMn_2O_4$), le pentoxyde de lithium et de vanadium ($LiV_2O_5$) ou le phosphate de lithium et de fer ($LiFePO_4$).

L'électrode négative 28 peut être, classiquement, constituée d'un ou de plusieurs matériaux choisis parmi les métaux de transition et leurs alliages, les métalloïdes et leurs alliages et, les matériaux d'intercalation ou d'insertion du lithium. L'électrode négative 28 peut être génératrice d'ions $Li^+$ ou bien également comporter un matériau actif d'intercalation du lithium. Les matériaux utilisés comme matériau actif de l'électrode négative 28 peuvent être des matériaux non lithiés comme, par exemple, du silicium (Si) et ses alliages comme l'alliage silicium/germanium (SiGe), l'étain et ses alliages comme l'alliage étain/cuivre ($Cu_6Sn_5$), le carbone ou un matériau d'intercalation ou d'insertion du lithium choisi parmi les oxynitrures d'étain et de silicium (SiTON), les nitrures d'étain ($SnN_x$), les nitrures d'indium ($InN_x$), les oxydes d'étain comme le dioxyde d'étain ($SnO_2$). Les matériaux utilisés comme matériaux actifs de l'électrode négative 28 peuvent être des matériaux lithiés, par exemple, un alliage $SiLi_x$ ou $GeLi_x$ comportant moins de 30% de lithium ou un oxyde mixte à base de lithium tel que l'oxyde de lithium et de nickel ($LiNiO_2$).

Les électrodes positive et négative, respectivement 27 et 28, peuvent évidemment avoir des positions inversées dans l'empilement 17. L'électrode positive 27 peut, par exemple, être en haut à la figure 3 et l'électrode négative 28 en bas.

L'électrolyte solide 20 est constitué par un matériau permettant la conduction des ions lithium $Li^+$. On choisira, de préférence, des matériaux isolants électriquement et conducteurs ioniques. L'électrolyte solide 20 peut être un matériau vitreux à base d'oxyde de bore, d'oxydes de lithium ou de sels de lithium ou, avantageusement, un composé à base de lithium tel qu'un oxynitrure de phosphore et de lithium (LiPON) ou un oxynitrure de phosphosilicate de lithium (LiSiPON).

La couche d'encapsulation 18 est classiquement constituée par un ou plusieurs matériaux choisis parmi les matériaux polymère, céramique ou métallique.

Les moyens de connexion électrique 25 sont constitués par au moins une cloison électriquement conductrice traversant la couche d'encapsulation 18 depuis la face interne 23 (en bas à la figure 3) jusqu'à la face externe 30 (en haut à la figure 3) de la couche d'encapsulation 18. En d'autres termes, la cloison débouche sur la face externe 30 de la couche d'encapsulation 18. On entend par cloison, un élément mince de faible épaisseur, déterminant des séparations dans de la couche d'encapsulation 18. La cloison a une paroi inférieure 31, une paroi supérieure 32 et des parois latérales 33 et a; de préférence, une section rectangulaire. L'épaisseur de la cloison est, avantageusement, comprise entre $0,5\mu m$ et $10\mu m$, de préférence entre $1\mu m$ et $5\mu m$. La hauteur de la cloison ou des parois latérales 33 de la cloison est, au moins égale à l'épaisseur de la couche d'encapsulation 18. La paroi inférieure 31 est en contact direct avec la face avant 22 du second ensemble 21 collecteur/électrode et la paroi supérieure 32 débouchant sur la face externe 30 de la couche d'encapsulation 18.

La cloison est, de préférence, formée par au moins un matériau électriquement conducteur, avantageusement, choisi parmi les métaux et leurs alliages, les polymères et les oxydes métalliques. La cloison est, avantageusement, constituée uniquement de matériaux conducteurs, par exemple de titane, de tungstène, de platine, de nickel ou de cuivre. La cloison est, de préférence, pleine c'est-à-dire remplie entièrement de matériaux.

Comme représenté à la figure 3, la paroi supérieure 32 de la cloison forme, de préférence, avec la face externe 30 de la couche d'encapsulation 18 une surface plane commune. La cloison ne fait ainsi pas saillie à la surface de la couche d'encapsulation 18.

Par ailleurs, les parois latérales 33 de chaque cloison (à droite et à gauche à la figure 3) sont perpendiculaires à la face avant 22 du second ensemble 21 collecteur/électrode. L'expansion volumique due à l'insertion et la désinsertion du lithium a alors peu d'effet sur une telle architecture car les contraintes mécaniques sont générées majoritairement selon une même direction, représentée par la flèche verticale à la figure 3, orthogonale par rapport au plan principal du substrat 2.

Pour une couche d'encapsulation 18 ayant une épaisseur uniforme au-dessus du second ensemble 21 collecteur/électrode, la hauteur de la cloison est égale en substance à l'épaisseur de la couche d'encapsulation 18 située au-dessus du second ensemble 21. On entend par hauteur de la cloison, la hauteur des parois latérales 33 de la cloison.

Pour une couche d'encapsulation 18 ayant une épaisseur de couche non uniforme au-dessus du second ensemble 21 collecteur/électrode, la hauteur de la cloison est en substance égale à l'épaisseur de la partie de la couche d'encapsulation 18 située de part et d'autre de la cloison.

La présence de la cloison au sein de la couche d'encapsulation 18 permet de créer une discontinuité des défauts présents dans la couche d'encapsulation 18 et de réduire ainsi les chemins critiques de diffusion d'espèces susceptibles de dégrader les éléments actifs de l'empilement 17 de la microbatterie. La cloison bloque les impuretés et crée une zone d'arrêt de propagation des fissures au sein de la couche d'encapsulation 18.

Par ailleurs, la cloison ayant une faible épaisseur, la section de contact entre la paroi inférieure 31 et la face interne 23 de la couche d'encapsulation 18 est fortement réduite. La zone fragile de la microbatterie, dépourvue d'encapsulation et protégée uniquement par la cloison, est ainsi fortement réduite.

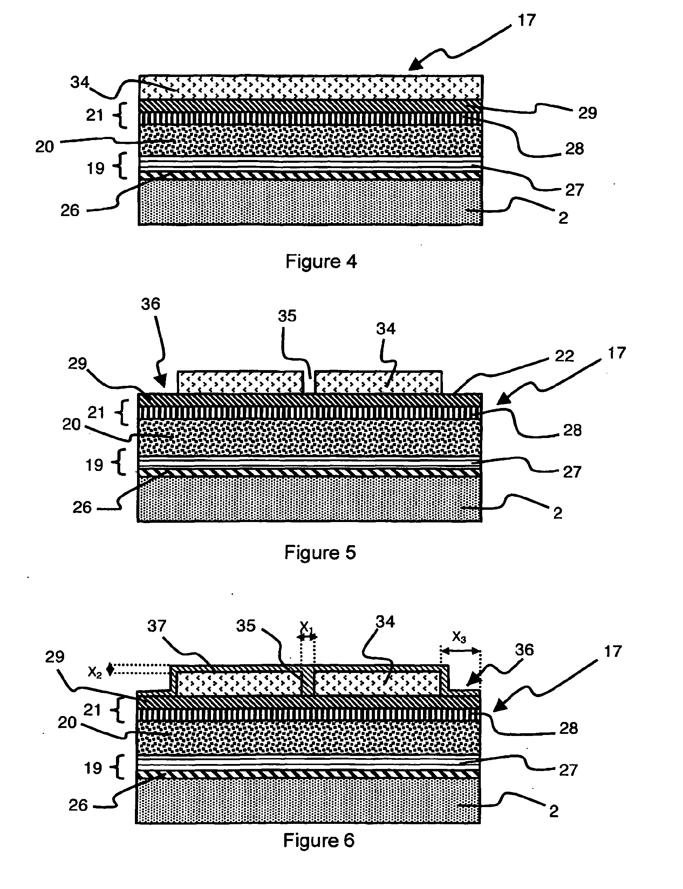

Selon un mode de réalisation particulier, la fabrication d'une telle microbatterie peut être réalisée selon un procédé de fabrication qui comporte les étapes successives représentées aux figures 4 à 11 et décrites ci-après.

Comme représenté à la figure 4, le procédé de fabrication comporte le dépôt pleine plaque, sur le substrat 2, d'un empilement 17 de couches minces formant successivement un premier collecteur de courant 26, une électrode positive 27, un électrolyte solide 20, une électrode négative 28 et un second collecteur de courant 29. Le premier collecteur de courant 26 et l'électrode positive 27 forment le premier ensemble 19 collecteur/électrode et, le second collecteur de courant 29 et l'électrode négative 28 forment le second ensemble 21 collecteur/électrode.

Cette étape est suivie d'un dépôt pleine plaque sur le second ensemble 21 collecteur/électrode d'une première couche de protection 34. Dans cette configuration, la première couche de protection 34 est déposée directement sur le second collecteur de courant 29.

Le dépôt pleine plaque est effectué selon tout procédé connu, par exemple, par dépôt PVD ou CVD. L'épaisseur des couches minces est typiquement comprise entre 0,1 μm à 5μm.

La première couche de protection 34 est constituée par un ou plusieurs matériaux choisis parmi les matériaux polymère ou céramique, avantageusement non conducteurs, par exemple, en époxyde, acrylate, parylène, silice ou nitrure.

Lorsqu'une étape de recuit thermique est nécessaire pour augmenter la cristallisation de la couche mince constituant une des électrodes et améliorer sa capacité d'insertion, cette étape de recuit peut être, avantageusement, réalisée après le dépôt pleine plaque de la première couche mince constituant ainsi l'électrode 27.

Comme représenté à la figure 5, au moins une tranchée 35 est ensuite réalisée dans la première couche de protection 34 selon tout procédé connu. La réalisation de la tranchée 35 est classiquement effectuée par des procédés conventionnels de masquage par photolithographie suivi de gravure, par exemple, par une gravure sélective sèche de type gravure ionique réactive (RIE pour "Reactive Ion Etching") ou par gravure sélective par voie humide.

La tranchée 35 forme une matrice pour réaliser une cloison. la cloison est destinée à introduire une discontinuité dans la première couche de protection 34. On entend par matrice une empreinte en creux de la cloison. La tranchée 35 traverse l'épaisseur de la première couche de projection 34 et débouche sur la face avant 22 du second ensemble 21 collecteur/électrode c'est-à-dire la face avant du second collecteur de courant 29.

Une ou plusieurs tranchées périphériques 36 sont également réalisées, avantageusement, simultanément à la tranchée 35 afin de définir la forme et les dimensions finales de la microbatterie. Les tranchées périphériques 36 traversent également l'épaisseur de la première couche de protection 34 et débouchent sur la face avant 22 du second ensemble 21 collecteur/électrode c'est-à-dire la face avant du second collecteur de courant 29.

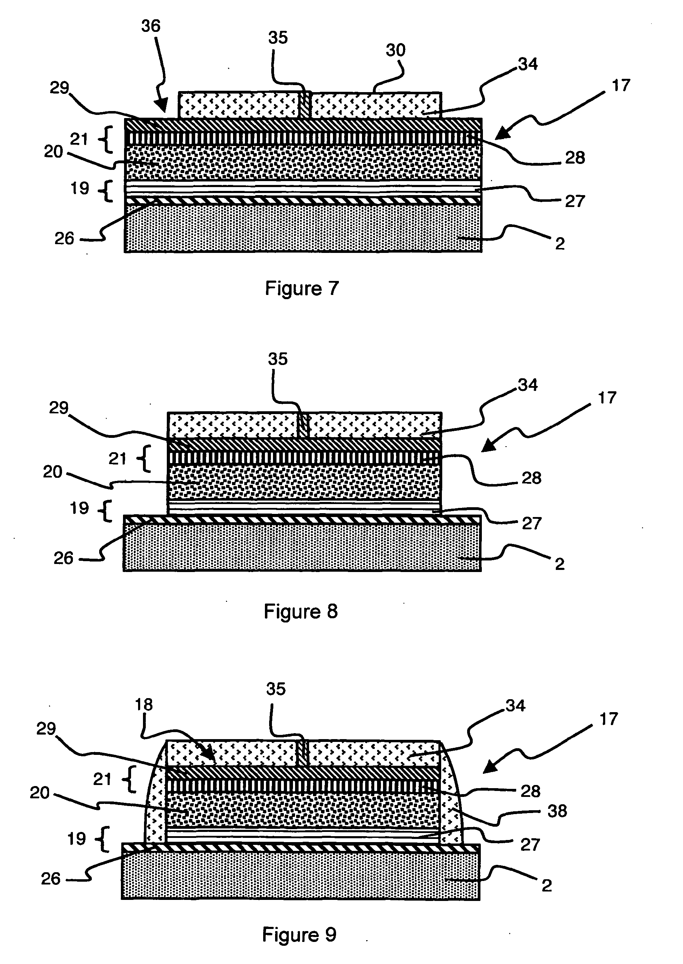

Comme représenté aux figures 6 et 7, la tranchée 35 est ensuite remplie avec un matériau électriquement conducteur. Cette étape de remplissage comporte le dépôt d'une couche mince 37 de matériau électriquement conducteur sur la première couche de protection 34 selon tout procédé connu, suivi par une gravure sélective de la couche mince 37. À titre d'exemple, la gravure sélective peut être une gravure par voie sèche.

Comme représenté à la figure 6, l'épaisseur de la tranchée 35, notée $X_1$, est de préférence inférieure ou égale au double de l'épaisseur de la couche mince 37, notée $X_2$, afin que la tranchée 35 soit entièrement remplie par le matériau électriquement conducteur constituant la couche mince 37.

L'épaisseur de la ou des tranchées périphériques 36, notée $X_3$, est de préférence supérieure ou égale au double de l'épaisseur $X_2$ de la couche mince 37. Ainsi, les tranchées périphériques 36 délimitant la microbatterie ne sont pas entièrement remplies.

Comme représenté à la figure 7, la couche mince 37 est gravée selon tout procédé connu, par exemple, par une gravure par voie sèche. Du fait du dimensionnement particulier des tranchées 35 et 36, la couche mince 37 localisée dans les tranchées périphériques 36 et sur la face externe 30 de la première couche de protection 34 (en haut à la figure 7) est éliminée car ces parties de couche mince 37 sont directement exposées à la solution d'attaque de la gravure alors que la partie de la couche mince 37 dans la tranchée 35, plus étroite, ne l'est pas. À l'issue de cette étape de gravure, seule la partie de la couche mince 37 dans la tranchée 35 subsiste.

Cette étape permet d'obtenir une cloison au sein de la première couche de protection 34 et ne nécessite pas, par ailleurs, une opération de masquage préalable à la gravure.

Comme représenté à la figure 8, après remplissage de la tranchée 35, on réalise une ou plusieurs étapes de gravure de l'empilement 17, selon tout procédé connu, pour localiser la microbatterie sur le substrat 2. Le type de gravure utilisé est fonction de la nature des couches minces à graver. Ainsi, il peut être envisagé de réaliser un masquage par photolithographie puis une gravure unique pour graver simultanément le second collecteur de courant 29, l'électrode négative 28, l'électrolyte solide 20 et l'électrode positive 27. Une partie de la surface de la première couche de protection 34 est alors exposée (à droite et à gauche à la figure 8). Cette étape de gravure permet de donner la forme finale de l'empilement 17 actif de la microbatterie. La partie exposée de la première couche de protection 34 peut être située autour l'empilement 17.

Selon une variante, la gravure de l'empilement 17 est réalisée par une succession de gravures sélectives pour une ou plusieurs couches minces correspondant au second collecteur de courant 29, à l'électrode négative 28, à l'électrolyte solide 20 ou à l'électrode positive 27.

Comme représenté à la figure 9, une seconde couche de protection 38 est réalisée selon tout procédé connu, par exemple par dépôt puis gravure. La seconde couche de protection 38 forme avec la seconde couche de protection 38 une couche continue, ininterrompue. La seconde couche de protection 38 est classiquement constituée par un ou plusieurs matériaux choisis parmi les matériaux polymère, céramique ou métallique. Les première et seconde couches de protection, respectivement 34 et 38, sont avantageusement constituées par le ou les mêmes matériaux. La seconde couche de protection 38 recouvre toutes les parties latérales de l'empilement 17 (à droite et à gauche à la figure 9) et s'étend de part et d'autre de l'empilement 17 sur le premier collecteur de courant 26, sans toutefois recouvrir toute la partie exposée du premier collecteur de courant 26. Les première et seconde couches de protection, respectivement 34 et 38, forment ainsi la couche d'encapsulation 18.

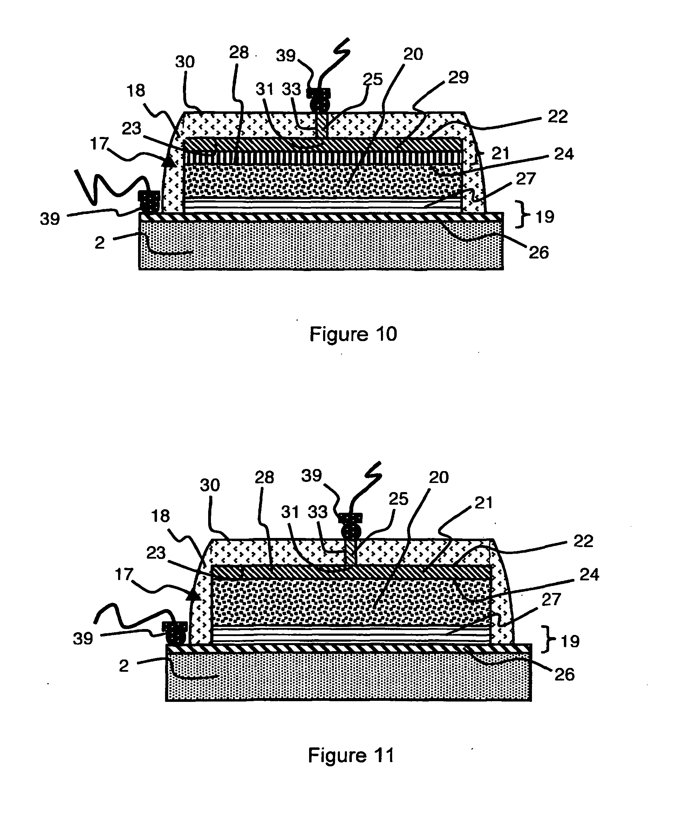

La surface exposée du premier collecteur de courant 26, située en périphérie de la microbatterie, constitue les points de contact pour une connexion à une charge électrique externe. Ainsi, comme illustré à la figure 10, des plots de contact 39 permettent de connecter une charge électrique externe (non représentée) aux premier et second collecteurs de courant, respectivement 26 et 29, et par conséquent à l'électrode positive 27 et l'électrode négative 28 de la microbatterie. Les plots de contact 39 peuvent être disposés de part et d'autre de l'empilement 17, sur la surface exposée du premier collecteur de courant 26. Des fils de contact sont classiquement soudés sur les plots de contact 39 et reliés à la charge électrique externe (figure 10).

Selon un second mode de réalisation particulier représenté à la figure 11, la microbatterie est une microbatterie "Li free". Avant la première charge de la microbatterie, le second ensemble 21 collecteur/électrode est formé initialement par une seule couche mince. Cette dernière est constituée par un métal ou un alliage métallique. Cette couche mince constitue une couche de placage pour un dépôt électrolytique de lithium métallique. Le dépôt de lithium est alors activé lors d'une charge de la microbatterie. Comme décrit dans le document WO-A1-0060689, avant sa mise en charge initiale, la microbatterie ne comporte pas de couche mince en lithium métallique constituant l'électrode négative 28. Cette dernière est formée par le dépôt électrolytique de lithium métallique lors de la charge de la microbatterie. Après la première charge de la microbatterie, le second ensemble 21 collecteur/électrode est formé d'une couche mince constituant le second collecteur de courant 29 et d'une couche mince en lithium métallique constituant l'électrode négative 28 (figure 10).

Le procédé de fabrication d'une microbatterie selon le second mode de réalisation particulier est identique au premier mode de réalisation décrit ci-dessus, à l'exception du fait que l'électrode négative 28 et le second collecteur de courant 29 sont réalisés par le dépôt d'une seule couche mince.

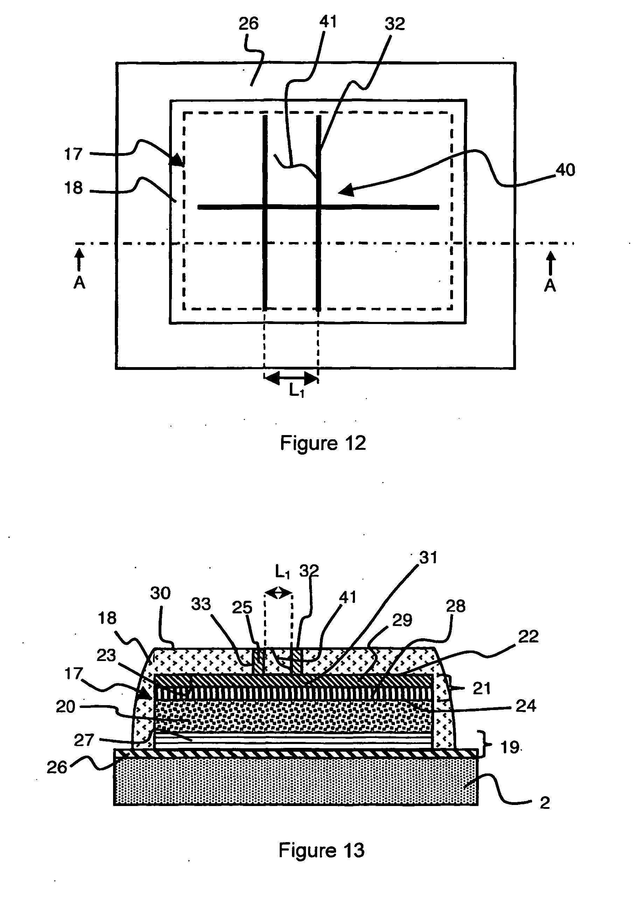

Selon un troisième mode de réalisation particulier représenté aux figures 12 et 13, les moyens de connexion électrique 25 sont constitués par au moins deux cloisons électriquement conductrices. Les cloisons forment un réseau de compartimentation 40 au sein de la couche d'encapsulation 18.

On entend par "réseau de compartimentation", un ensemble formé d'au moins deux cloisons de compartimentation qui s'entrecroisent, avantageusement de façon régulière, lesdites cloisons divisant la couche d'encapsulation 18 en plusieurs compartiments. Le réseau de compartimentation crée ainsi une ou plusieurs zone(s) d'arrêt de propagation des fissures 41 qui sont susceptibles de se former au sein de la couche d'encapsulation 18, lors du fonctionnement de la microbatterie.

Chacune des cloisons a la paroi inférieure 31 en contact direct avec la face avant 22 du second ensemble 21 collecteur/électrode et la paroi supérieure 32 débouchant sur la face externe 30 de la couche d'encapsulation 18.

Selon une configuration avantageuse, au moins deux cloisons sont adjacentes et parallèles l'une par rapport à l'autre. Ainsi, les deux cloisons sont séparées l'une de l'autre par une partie de la couche d'encapsulation 18. Les parois latérales 33 des cloisons sont perpendiculaires à la face avant 22 du second ensemble 21 collecteur/électrode et parallèles entre elles (figure 13).

La distance séparant les deux cloisons adjacentes et parallèles, notée $L_1$ est, de préférence, inférieure ou égale à l'inverse de la racine carré de la densité de dislocations, notée $d_d$, de la couche d'encapsulation 18. On entend par densité de dislocations de la couche d'encapsulation 18, la densité de défauts par unité de surface. Ainsi, pour réduire ou éliminer la discontinuité des défauts, la configuration de la microbatterie, en particulier, la disposition des cloisons l'une par rapport à l'autre doit vérifier la relation suivante :

$$L_1 \leq \frac{1}{\sqrt{d_d}}$$

À titre d'exemple, pour une densité de dislocation de 4 disloc/$\mu$m$^2$, la distance $L_1$ séparant les deux cloisons adjacentes et parallèles doit être inférieure ou égale à 0,5 $\mu$m$^2$.

Le réseau de compartimentation 40 crée une discontinuité des défauts présents dans la couche d'encapsulation 18 et réduit ainsi les chemins critiques de diffusion des espèces susceptibles de dégrader les éléments actifs de l'empilement 17 de la microbatterie. De même, chaque cloison du réseau de compartimentation 40 crée une zone d'arrêt de propagation des fissures 41 au sein de la couche d'encapsulation. Ainsi, l'architecture de la microbatterie limite les zones fragiles de la microbatterie, augmente la densité d'intégration et a pour effet d'améliorer les performances de la microbatterie.

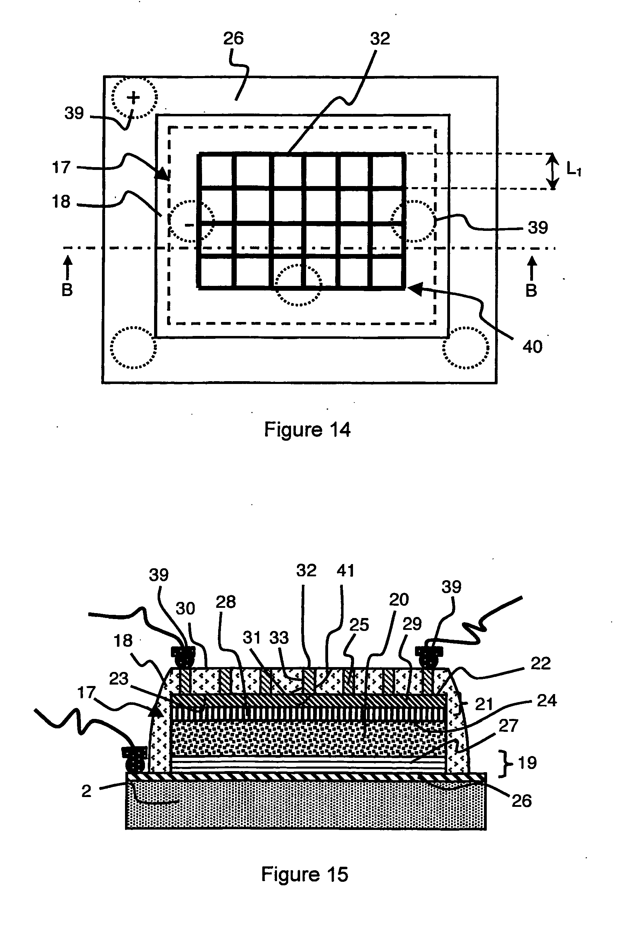

Selon un quatrième mode de réalisation particulier représenté aux figures 14 et 15, le réseau de compartimentation 40 a une structure en treillis avec des motifs à forme parallélogramme, par exemple, à motif carré ou rectangle.

Comme illustré à la figure 14, le réseau de compartimentation 40 a, de préférence, une structure en forme de grille. Le maillage des cloisons forme dans la couche d'encapsulation 18 des compartiments isolés les uns des autres qui empêchent toute diffusion d'espèces susceptibles de dégrader les éléments constitutifs de l'empilement 17 et les fissures 41.

Par ailleurs, les parois supérieures 32 des cloisons forment à la surface de la couche d'encapsulation 18 des lignes de connexion permettant la connexion électrique de la microbatterie à une ou plusieurs charges électriques externes. Comme illustré à la figure 14, on peut, par exemple, placer au moins un plot de contact 39 sur une ligne de connexion, en contact avec une des parois supérieures 32 du réseau de compartimentation 40 et relié à la borne négative d'une charge électrique externe (non représentée). Au moins un autre plot de contact 39 est alors placé à la surface exposée du premier collecteur de courant 26 et relié à la borne positive de la charge électrique externe.

Selon une variante non représentée, la surface exposée du premier collecteur de courant 26 est située uniquement d'un côté de l'empilement 17 encapsulé afin de limiter la surface du substrat dédiée au collecteur de courant et améliorer la densité d'intégration.

Le procédé de fabrication d'une microbatterie selon les troisième et quatrième modes de réalisation est identique à celui du premier mode de réalisation décrit précédemment à l'exception de la forme de la matrice permettant de réaliser les cloisons constituant les moyens de connexion électrique 25. Ainsi, le procédé comporte la réalisation dans la première couche de protection 34 d'au moins une tranchée 35 qui forme la matrice pour réaliser les cloisons. Les cloisons peuvent, classiquement, être réalisées à partir d'une seule tranchée ou de plusieurs tranchées.

L'invention ne se limite pas aux modes de réalisation décrit ci-dessus. Notamment, la couche d'encapsulation 18 est constituée uniquement de la première couche de protection 34. Le procédé de fabrication diffère alors de celui du premier mode de réalisation décrit précédemment en ce que la gravure de l'empilement 17 est réalisée avant celle de la première couche de protection 34 et en ce que la première couche de protection 34 est déposée sur le premier collecteur de courant 26 et l'empilement 17, de sorte qu'elle recouvre entièrement l'empilement 17. La ou les tranchées sont alors réalisées directement sur la couche d'encapsulation 18.

Une microbatterie au lithium ayant une architecture optimisée, à connexion verticale, a été réalisée selon le procédé de fabrication de l'invention. L'architecture de cette batterie évite la présence de reprise de contact qui fragilise la couche d'encapsulation 18 et altère ses propriétés mécaniques et hermétiques.

La microbatterie selon l'invention a une architecture qui permet de limiter la surface du substrat dédiée aux collecteurs de courant et d'améliorer la densité d'intégration. Par ailleurs, la présence de cloisons et, en particulier, d'un réseau de compartimentation permet de conserver l'effet barrière de la couche d'encapsulation en limitant les zones fragiles et d'améliorer les performances de la batterie, notamment leur durée de vie, comparativement aux microbatteries de l'art antérieur.

Ces microbatteries trouvent de nombreuses applications industrielles notamment dans le domaine de la microélectronique où la miniaturisation des composants et les besoins en autonomie imposent l'utilisation d'accumulateurs plus petits, plus puissants et ayant des durées de vie plus longues.

Contrairement aux procédés de fabrication selon l'art antérieur qui nécessitent plusieurs étapes, souvent complexes, de dépôt et de gravure des différentes couches formant la microbatterie au lithium, le procédé de fabrication selon l'invention est facile à mettre en oeuvre et simple. De façon caractéristique, le procédé de fabrication peut être réalisé avec un nombre réduit d'étape de gravure et de masquage, en particulier, une seule étape est nécessaire pour la gravure de l'empilement 17. Les interfaces fonctionnelles de la microbatterie étant protégées au cours du procédé de fabrication, la qualité de ces interfaces est, en outre, préservée.

Un tel procédé de fabrication d'une microbatterie au lithium est compatible avec les technologies mises en oeuvre dans le domaine de la microélectronique, ce qui permet, notamment, d'incorporer une telle microbatterie au lithium sur un microcomposant et de réduire les coûts de fabrication.

## Revendications

1. Microbatterie qui comporte un empilement (17) de couches minces solides formé sur un substrat (2), ledit empilement (17) étant recouvert par une couche d'encapsulation (18) et comportant successivement :

   - un premier ensemble (19) collecteur/électrode en contact direct avec le substrat (2),
   - un électrolyte solide (20),
   - un second ensemble (21) collecteur/électrode ayant une face avant (22) en contact direct avec la face interne (23) de la couche d'encapsulation (18) et une face arrière (24) en contact direct avec l'électrolyte solide (20) et,
   - des moyens de connexion électrique (25) du second ensemble (21) collecteur/électrode à une charge électrique externe,

   Microbatterie **caractérisée en ce que** les moyens de connexion électrique (25) sont constitués par au moins deux cloisons électriquement conductrices traversant la couche d'encapsulation (18) depuis la face interne (23) jusqu'à la face externe (30) de ladite couche d'encapsulation (18), chacune desdites cloisons ayant une paroi inférieure (31) en contact direct avec la face avant (22) du second ensemble (21) collecteur/électrode et une paroi supérieure (32) débouchant sur la face externe (30) de la couche d'encapsulation (18) et **en ce que** lesdites cloisons forment un réseau de compartimentation (40) au sein de la couche d'encapsulation (18).

2.  Microbatterie selon la revendication 1, **caractérisée en ce qu'**au moins deux cloisons sont adjacentes et parallèles l'une par rapport à l'autre et, séparées par une partie de la couche d'encapsulation (18).

3.  Microbatterie selon la revendication 2, **caractérisée en ce que** la distance séparant les deux cloisons adjacentes et parallèles est inférieure ou égale à l'inverse de la racine carré de la densité de dislocations de ladite couche d'encapsulation (18).

4.  Microbatterie selon l'une quelconque des revendications 1 à 3, **caractérisée en ce que** le réseau de compartimentation (40) a une structure en treillis avec des motifs à forme parallélogramme, de préférence, en forme de grille.

5.  Microbatterie selon l'une quelconque des revendications 1 à 4, **caractérisée en ce que** les parois latérales (33) de chaque cloison sont perpendiculaires à la face avant (22) du second ensemble (21) collecteur/ électrode.

6.  Microbatterie selon l'une quelconque des revendications 1 à 5, **caractérisée en ce que** la paroi supérieure (32) de la cloison forme avec la face externe (30) de la couche d'encapsulation (18) une surface plane commune.

7.  Procédé de fabrication d'une microbatterie selon l'une quelconque des revendications 1 à 6, **caractérisé en ce qu'**il comporte les étapes successives suivantes :

    - dépôt pleine plaque, sur le substrat (2), d'un empilement (17) de couches minces formant successivement un premier ensemble (19) collecteur/électrode, un électrolyte solide (20), un second ensemble (21) collecteur/électrode,
    - dépôt pleine plaque sur le second ensemble (21) collecteur/électrode d'une première couche de protection (34),
    - réalisation dans la première couche de protection (34) d'au moins une tranchée (35) qui forme une matrice pour réaliser les cloisons, ladite tranchée (35) traversant l'épaisseur de la première couche de protection (34) et débouchant sur la face avant (22) du second ensemble (21) collecteur/électrode et,
    - remplissage de la tranchée (35) avec un matériau électriquement conducteur.

8.  Procédé selon la revendication 7, **caractérisé en ce que** l'étape de remplissage comporte le dépôt d'une couche mince (37) de matériau électriquement conducteur sur la première couche de protection (34) suivi par une gravure sélective de ladite couche mince (37).

9.  Procédé selon l'une des revendications 7 et 8, **caractérisé en ce qu'**il comporte après remplissage de la tranchée (35), une ou plusieurs étapes de gravure de l'empilement (17), pour localiser la microbatterie sur le substrat (2).

10. Procédé selon la revendication 9, **caractérisé en ce qu'**après gravure de l'empilement (17), on réalise une seconde couche de protection (38) recouvrant toutes les parties latérales de l'empilement (17) et formant avec la première couche de protection (34) une couche d'encapsulation (18).

**Patentansprüche**

1.  Mikrobatterie, die einen auf einem Substrat (2) gebildeten Stapel (17) aus festen dünnen Schichten umfasst, wobei der Stapel (17) durch eine Verkapselungsschicht (18) überzogen ist und nacheinander umfasst:

    - eine erste Kollektor/Elektrode-Anordnung (19) in direktem Kontakt mit dem Substrat (2),
    - einen festen Elektrolyten (20),
    - eine zweite Kollektor/Elektrode-Anordnung (21) mit einer Vorderseite (22) in direktem Kontakt mit der Innenseite (23) der Verkapselungsschicht (18) sowie einer Rückseite (24) in direktem Kontakt mit dem festen Elektrolyten (20), und
    - Mittel zum elektrischen Verbinden (25) der zweiten Kollektor/Elektrode-Anordnung (21) mit einer externen elektrischen Last,

    Mikrobatterie, **dadurch gekennzeichnet, dass** die Mittel zum elektrischen Verbinden (25) durch wenigstens zwei elektrisch leitende Trennwände, welche die Verkapselungsschicht (18) von der Innenseite (23) bis zur Außenseite (30) der Verkapselungsschicht (18) durchziehen, gebildet sind, wobei eine jede der Trennwände eine untere Wand (31) in direktem Kontakt mit der Vorderseite (22) der zweiten Kollektor/Elektrode-Anordnung (21) und eine obere Wand (32), die an der Außenseite (30) der Verkapselungsschicht (18) ausmündet, aufweist, und dass die Trennwände ein Unterteilungsnetz (40) innerhalb der Verkapselungsschicht (18) bilden.

2.  Mikrobatterie nach Anspruch 1, **dadurch gekennzeichnet, dass** wenigstens zwei Trennwände benachbart sind und parallel zueinander verlaufen und durch einen Teil der Verkapselungsschicht (18) getrennt sind.

3.  Mikrobatterie nach Anspruch 2, **dadurch gekennzeichnet, dass** der die beiden benachbarten und parallel verlaufenden Trennwände trennende Abstand kleiner als der oder gleich dem Kehrwert der Quadratwurzel der Versetzungsdichte der Verkapselungsschicht (18) ist.

4. Mikrobatterie nach einem der Ansprüche 1 bis 3, **dadurch gekennzeichnet, dass** das Unterteilungsnetz (40) eine Gitterstruktur mit Mustern mit Parallelogrammform, vorzugsweise in Gitterform aufweist.

5. Mikrobatterie nach einem der Ansprüche 1 bis 4, **dadurch gekennzeichnet, dass** die Seitenwände (33) jeder Trennwand zu der Vorderseite (22) der zweiten Kollektor/Elektrode-Anordnung (21) senkrecht verlaufen.

6. Mikrobatterie nach einem der Ansprüche 1 bis 5, **dadurch gekennzeichnet, dass** die obere Wand (32) der Trennwand mit der Außenseite (30) der Verkapselungsschicht (18) eine gemeinsame ebene Fläche bildet.

7. Verfahren zur Herstellung einer Mikrobatterie nach einem der Ansprüche 1 bis 6, **dadurch gekennzeichnet, dass** es die folgenden aufeinanderfolgenden Schritte umfasst:

   - vollflächiges Abscheiden, auf dem Substrat (2), eines Stapels (17) aus dünnen Schichten, der nacheinander eine erste Kollektor/Elektrode-Anordnung (19), einen festen Elektrolyten (20), eines zweite Kollektor/Elektrode-Anordnung (21) bildet,
   - vollflächiges Abscheiden einer ersten Schutzschicht (34) auf der zweiten Kollektor/Elektrode-Anordnung (21),
   - Ausbilden, in der ersten Schutzschicht (34), wenigstens einer Schneise (35), die eine Matrize bildet, um die Trennwände auszubilden, wobei die Schneise (35) die Dicke der ersten Schutzschicht (34) durchzieht und an der Vorderseite (22) der zweiten Kollektor/Elektrode-Anordnung (21) ausmündet, und
   - Ausfüllen der Schneise (35) mit einem elektrisch leitenden Material.

8. Verfahren nach Anspruch 7, **dadurch gekennzeichnet, dass** der Ausfüllschritt das Abscheiden einer dünnen Schicht (37) aus elektrisch leitendem Material auf der ersten Schutzschicht (34) umfasst, an das sich ein selektives Ätzen der dünnen Schicht (37) anschließt.

9. Verfahren nach einem der Ansprüche 7 und 8, **dadarch gekennzeichnet,** dass es nach dem Ausfüllen der Schneise (35) einen oder mehrere Schritt (e) zum Ätzen des Stapels (17) umfasst, um die Mikrobatterie auf dem Substrat (2) einzugrenzen.

10. Verfahren nach Anspruch 9, **dadurch gekennzeichnet, dass** nach dem Ätzen des Stapels (17) eine zweite Schutzschicht (38) ausgebildet wird, die alle Seitenteile des Stapels (17) bedeckt und mit der ersten Schutzschicht (34) eine Verkapselungsschicht (18) bildet.

**Claims**

1. A microbattery that comprises a stack (17) of solid thin layers formed on a substrate (2), said stack (17) being covered by an encapsulation layer (18) and successively comprising:

   - a first current collector/electrode assembly (19) in direct contact with the substrate (2),
   - a solid electrolyte (20),
   - a second current collector/electrode assembly (21) having a front surface (22) in direct contact with the inner surface (23) of the encapsulation layer (18) and a rear surface (24) in direct contact with the solid electrolyte (20) and,
   - electrical connection means (25) of the second current collector/electrode assembly (21) to an external electrical load,

   a microbattery **characterized in that** the electrical connection means (25) are formed by at least two electrically conductive barriers passing through the encapsulation layer (18) from the inner surface (23) to the outer surface (30) of said encapsulation layer (18), each of said barriers having a lower wall (31) in direct contact with the front surface (22) of the second current collector/ electrode assembly (21) and an upper wall (32) opening onto the outer surface (30) of the encapsulation layer (18) and **in that** said barriers form a compartmentalization network (40) within the encapsulation layer (18).

2. The microbattery according to claim 1, **characterized in that** at least two barriers are adjacent and parallel to one another and are separated by a part of the encapsulation layer (18).

3. The microbattery according to claim 2, **characterized in that** the distance separating the two adjacent and parallel barriers is smaller than or equal to the inverse of the square root of the dislocation density of said encapsulation layer (18).

4. The microbattery according to any one of claims 1 to 3, **characterized in that** the compartmentalization network (40) has a meshed structure with patterns in the form of a parallelogram, preferably in the form of a grid.

5. The microbattery according to any one of claims 1 to 4, **characterized in that** the side walls (33) of each barrier are perpendicular to the front surface (22) of the second current collector/electrode assembly (21).

6. The microbattery according to any one of claims 1 to 5, **characterized in that** the upper wall (32) of the barrier forms a common flat surface with the outer surface (30) of the encapsulation layer (18).

7. A manufacturing method of a microbattery according to any one of claims 1 to 6, **characterized in that** it comprises the following successive steps:

   - full-wafer deposition, on the substrate (2), of a stack (17) of thin layers successively forming a first current collector/electrode assembly (19), a solid electrolyte (20), and a second current collector/electrode assembly (21),
   - full-wafer deposition of a first protective layer (34) on the second current collector/electrode assembly (21),
   - making in the first protective layer (34) at least one trench (35) that forms a matrix to form the barriers, said trench (35) passing through the thickness of the first protective layer (34) and opening onto the front surface (22) of the second current collector/electrode assembly (21) and,
   - filling the trench (35) with an electrically conductive material.

8. The method according to claim 7, **characterized in that** the filling step comprises deposition of a thin layer (37) of electrically conductive material on the first protective layer (34) followed by selective etching of said thin layer (37).

9. The method according to one of claims 7 and 8, **characterized in that**, after filling of the trench (35), it comprises one or more etching steps of the stack (17) to localize the microbattery on the substrate (2).

10. The method according to claim 9, **characterized in that**, after etching of the stack (17), a second protective layer (38) is made covering all the lateral parts of the stack (17) and forming an encapsulation layer (18) with the first protective layer (34).

Figure 1 (Art antérieur)

Figure 2 (Art antérieur)

Figure 3

Figure 4

Figure 5

Figure 6

Figure 7

Figure 8

Figure 9

Figure 10

Figure 11

Figure 12

Figure 13

Figure 14

Figure 15

**EP 2 543 095 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008011061 A
- US 20070238019 A
- JP 61165965 A
- US 2007087230 A
- DE 102008011523 A
- WO 0060689 A1